# EUROPÄISCHE PATENTANMELDUNG

(11) **EP 1 589 416 A2**
(43) Veröffentlichungstag der Anmeldung: **26.10.2005**
(21) Anmeldenummer: 05008903.6
(22) Anmeldetag: 22.04.2005
(51) Int. Cl.: G06F 9/44

(54) **Verfahren und System zum Erzeugen eines Quellcodes für ein Computerprogramm**

(30) Priorität: 23.04.2004 DE 102004019958
(71) Anmelder: jCOM1 AG, 85296 Rohrbach (DE)
(72) Erfinder: Fleischmann, Albert, Dr., 85276 Pfaffenhofen (DE); Meyer, Nils, 85276 Pfaffenhofen (DE)
(74) Vertreter: Ganahl, Bernhard

(57) **Zusammenfassung**

Die Erfindung betrifft ein Verfahren zum Erzeugen eines Quellcodes für ein Computerprogramm zur Ausführung beziehungsweise Simulation eines komplexen Prozesses, bei dem eine Vielzahl von Subjekten miteinander kommunizieren. Bei diesem Verfahren werden die Prozesse beschrieben, die Beschreibung der Prozesse in einer Prozessdatei gespeichert und an Hand der Prozessdatei ein Quellcode für ein Computerprogramm erzeugt, wobei für jedes Subjekt eine separate Quellcodedatei erzeugt wird.

Durch das Vorsehen einer Quellcodedatei für ein jedes Subjekt kann ein komplexer Prozess einfach und damit automatisch in mehrere Teilprogramme, den Qellcodedateien, aufgeteilt werden, die automatisch erzeugbar sind. Hierdurch kann für einen sehr komplexen Prozess automatisch ein Computerprogramm erzeugt werden.

Ein weiterer Vorteil des erfindungsgemäßen Verfahrens liegt darin, dass es nach der automatischen Erzeugung ausgeführt werden kann, das heißt, es kann unmittelbar nach Erzeugung bei einer Ausführung validiert werden.

## Beschreibung

Die Erfindung betrifft ein Verfahren und System zum Erzeugen eines Quellcodes für ein Computerprogramm zur Ausführung bzw. Simulation eines Prozesses, bei dem mehrere Subjekte miteinander kommunizieren. Insbesondere ist das erfindungsgemäße Verfahren zum Erzeugen eines Quellcodes für ein Computerprogramm zur Ausführung bzw. Simulation eines komplexen Prozesses, mit einer Vielzahl von Subjekten vorgesehen, die miteinander kommunizieren.

Verfahren zum automatischen Erzeugen eines Quellcodes sind hinlänglich bekannt. So ist in der WO 98/39698 ein Verfahren zum Erstellen eines einen betriebswirtschaftlichen Prozess steuernden Computerprogramms beschrieben, bei dem zunächst mehrere Diagramme erzeugt werden, um mit Hilfe dieser Diagramme automatisch das Computerprogramm erzeugt wird.

Ein weiteres derartiges Verfahren ist in der DE 100 08 632 B4 beschrieben, bei der auch aus speziellen Diagrammen automatisch ein Quellcode erzeugt wird.

Mit bekannten Verfahren zum automatischen Erzeugen eines Quellcodes können sowohl für technische als auch betriebswirtschaftliche Prozesse Computerprogramme automatisch erzeugt werden. Jedoch ist es mit diesen bekannten Verfahren schwierig, komplexe Prozesse in einem Computerprogramm umzusetzen. Komplexe Prozesse werden oftmals von einem bekannten Verfahren nicht bewältigt. Sollten die bekannten Verfahren es jedoch schaffen, für komplexe Prozesse auch einen Quellcode automatisch zu erzeugen, dann ist der Quellcode zum einen sehr umfangreich und zum anderen aufgrund der Komplexität des zugrunde liegenden Prozesses oftmals fehlerbehaftet und langsam in der Ausführung.

Der Erfindung liegt die Aufgabe zugrunde, ein Verfahren und ein System zum Erzeugen eines Quellcodes für ein Computerprogramm zur Ausführung bzw. Simulation eines komplexen Prozesses zu schaffen, das nicht den oben genannten Nachteilen unterliegt.

Die Aufgabe wird durch ein Verfahren mit den Merkmalen des Anspruchs 1 und durch ein System mit den Merkmalen des Anspruchs 13 gelöst.

Weiterhin liegt der Erfindung die Aufgabe zugrunde, ein Verfahren zu schaffen, mit dem ein für einen komplexen Prozess automatisch erzeugter Quellcode validiert werden kann.

Diese Aufgabe wird durch ein Verfahren mit den Merkmalen des Anspruchs 11 gelöst.

Vorteilhafte Ausgestaltungen der Erfindung sind in den jeweiligen Unteransprüchen angegeben.

Das erfindungsgemäße Verfahren zum Erzeugen eines Quellcodes für ein Computerprogramm zur Ausführung bzw. Simulation eines Prozesses, bei dem mehrere Subjekte miteinander kommunizieren, umfasst folgende Schritte:
- Erzeugen einer Beschreibung des Prozesses, wobei ein jedes Subjekt, die Kommunikation zwischen den Subjekten und die Art der Tätigkeit der einzelnen Subjekte definiert werden,
- Speichern der Beschreibung des Prozesses mit den eingegebenen Definitionen in einer Prozessdatei, in der das Diagramm beschrieben ist,
- automatisches Erzeugen eines Quellcodes für ein Computerprogramm, wobei für ein jedes Subjekt eine separate Quellcodedatei erzeugt wird, die jeweils Befehle zum Austausch von Daten mit Quellcodedateien weiterer Subjekte umfassen.

Durch das automatische Erzeugen einer Quellcodedatei für jedes Subjekt, das einen Quellcode enthält, in dem Befehle zum Austausch von Daten mit Quellcodedateien weiterer Subjekte enthalten sind, können selbst beliebig komplexe Prozesse einfach und strukturiert automatisch in einen Quellcode umgesetzt werden. Je komplexer ein Prozess ist, desto mehr Quellcodedateien erzeugt das erfindungsgemäße Verfahren, wobei die einzelnen Quellcodedateien nicht komplexer werden. Es hat sich gezeigt, dass bei komplexen Prozessen mit vielen Quellcodedateien jede einzelne Quellcodedatei lediglich mit einer begrenzten Anzahl von weiteren Quellcodedateien kommuniziert, so dass die Struktur einer jeden einzelnen Quellcodedatei einfach und daher wenig fehleranfällig ist. Zur Speicherung und Verwaltung einer Vielzahl von Quellcodedateien muss lediglich eine ausreichend große Speicherkapazität vorgesehen sein. Prinzipielle Probleme werden hierdurch nicht erzeugt.

Der mit dem erfindungsgemäßen Verfahren hergestellte Quellcode kann entweder von einem herkömmlichen Compiler in ein lauffähiges Programm umgesetzt werden oder von einem Interpreter direkt ausgeführt werden. Das Programm ist sofort ohne weitere Bearbeitung ausführbar. Eine manuelle Bearbeitung des automatisch erzeugten Quellcodes ist nicht notwendig. Der Quellcode ist somit sofort ausführbar.

Dass aus einer allgemeinen Prozessbeschreibung automatisch ein ausführbarer Quellcode generiert wird, stellt eine wesentliche Neuerung gegenüber bekannten Verfahren dar.

Ein weiterer Vorteil der Erzeugung einer separaten Quellcodedatei für jedes Subjekt liegt darin, dass die einzelnen Quellcodedateien auf unterschiedlichen Computern in einem Netzwerk ausführbar sind. Die zur Kommunikation zwischen den einzelnen Subjekten verwendeten Funktionen (SENDEN, EMPFANGEN) sind derart ausgebildet, dass auch eine Netzwerk übergreifende Kommunikation ausführbar ist. Mit dem erfindungsgemäßen Verfahren können somit Computerprogramme erzeugt werden, die auf einem Netzwerk verteilt ausführbar sind, wobei die Art des Netzwerkes beliebig sein kann. Es können lokale Netzwerke (LAN), Intranets oder das Internet, sowie Netzwerke mit gemischter Topologie sein.

Nach einer bevorzugten Ausführungsform der Erfindung ist die Quellcodedatei mit Verweisen auf Daten der Prozessdatei versehen, so dass beim Ausführen des Quellcodes die entsprechenden Daten der Prozessdatei ausgelesen werden und in Abhängigkeit dieser Daten Befehle aufgerufen werden. Hierdurch werden die Daten der Prozessdatei zur unmittelbaren Steuerung des Quellcodes herangezogen. Dies hat zur Folge, dass beim Erstellen der Prozessdatei automatisch ein wesentlicher Teil des auszuführenden Computerprogramms erzeugt wird und der automatisch zu erzeugende Quellcode sehr kompakt gehalten werden kann.

Nach einer weiteren Ausführungsform der Erfindung werden mit der Quellcodedatei lediglich drei unterschiedliche Typen von Funktionen, nämlich SENDEN, EMPFANGEN und TUN aufgerufen. Die Verwendung von lediglich drei Typen von Funktionen macht die automatische Erzeugung eines Quellcodes einfach, wobei durch die Funktionen SENDEN und EMPFANGEN die Kommunikation zwischen den Subjekten vollständig geregelt werden kann, auch wenn es sich um einen komplexen Prozess handeln sollte.

Beim erfindungsgemäßen Verfahren zum Validieren der Kommunikation eines automatisch erzeugten Quellcodes werden für Aktionen, für die nicht automatisch ein Quellcode erzeugbar ist, eine Abfrage an den Benutzer bei der automatischen Erzeugung des Quellcodes eingesetzt, und beim Validieren des automatisch erzeugten Quellcodes der Quellcode zur Ausführung gebracht, wobei der Benutzer interaktiv die einzelnen Abfragen zu bestätigen hat und gegebenenfalls bestimmte Eingaben zu tätigen hat.

Hierdurch ist es möglich, einen automatisch erzeugten Quellcode auszuführen, ohne dass der Quellcode zusätzlich durch manuelle Programmierarbeit ergänzt werden muss.

Wird mit diesem Verfahren ein gemäß den Ansprüchen 1 bis 10 erzeugter Quellcode validiert, so kann die Kommunikation zwischen den einzelnen Subjekten und damit die Korrektheit der Modellierung des Prozesses vollständig überprüft werden und lediglich bei Aktionen innerhalb eines Subjektes, die der oben genannten Funktion TUN entsprechen, müssen Abfragen an den Benutzer eingesetzt werden.

Die Erfindung wird nachfolgend beispielhaft anhand der Zeichnungen erläutert. In den Zeichnungen zeigen:
- Figur 1: schematisch in einem Flussdiagramm das Verfahren zum Erzeugen eines Prozessorcodes für ein Subjekt aus einer vorab eingegebenen Prozessdatei,
- Figur 2: schematisch in einem Flussdiagramm die Teilschritte des in Fig. 1 gezeigten Schrittes "Quellcode erzeugen".
- Figur 3: schematisch in einem Flussdiagramm die Teilschritte des in Fig. 2 gezeigten Schrittes "Quellcode für Subjekt erzeugen",
- Figur 4: den Ablauf eines automatisch erzeugten Quellcodes für ein Subjekt, wobei der Quellcode keine Refinements enthält,
- Figur 5: schematisch die Struktur einer Prozessdatei,
- Figur 6: ein Prozessdiagramm eines Beispielprozesses,
- Figur 7: einen Ausschnitt aus einer Prozessdatei, die die Daten zum Subjekt OBU-Fahren (on board unit) zeigt,
- Figur 8: den Ablauf eines automatisch erzeugten Quellcodes, dem manuell programmierte Programmabschnitte (Refinements) hinzugefügt sind in einem Flussdiagramm,
- Figur 9: eine Bildschirmdarstellung eines Prozessmanagers zum Eingeben eines Prozesses,
- Figur 10: eine Bildschirmdarstellung eines Subjektmanagers zum Eingeben der Funktionen eines Subjekts,
- Figur 11: eine Bildschirmdarstellung, die ein Fenster zum Aufrufen der einzelnen Quellcodes zum Validieren derselben zeigt,
- Figur 12, Figur 13 und Figur 14: jeweils Bildschirmdarstellungen, die das Validierungsverfahren während unterschiedlicher Zustände zeigen,
- Figur 15: schematisch in einem Blockschaltbild ein System zum Ausführen des erfindungsgemäßen Verfahrens,
- Figur 16, Figur 17: Bildschirmdarstellung jeweils eines Fensters zum Eingeben von Inputpool-Definitionen.

Bei dem erfindungsgemäßen Verfahren wird ein in einer Prozessdatei dargestellter Prozess automatisch in einen Quellcode für ein Computerprogramm umgesetzt. Der Prozess kann sowohl technischer als auch betriebswirtschaftlicher Art sein oder sowohl technische als auch betriebswirtschaftliche Komponenten umfassen. Wesentlich für die Erfindung ist, dass in dem Prozess einzelne Akteure festlegbar sind, die natürliche Personen als auch bestimmte Geräte oder Teile von Geräten oder sonstige Stationen im Prozess sein können, die entweder mit weiteren Akteuren kommunizieren und/oder Handlungen ausführen. Diese Akteure werden im folgenden als Subjekte bezeichnet.

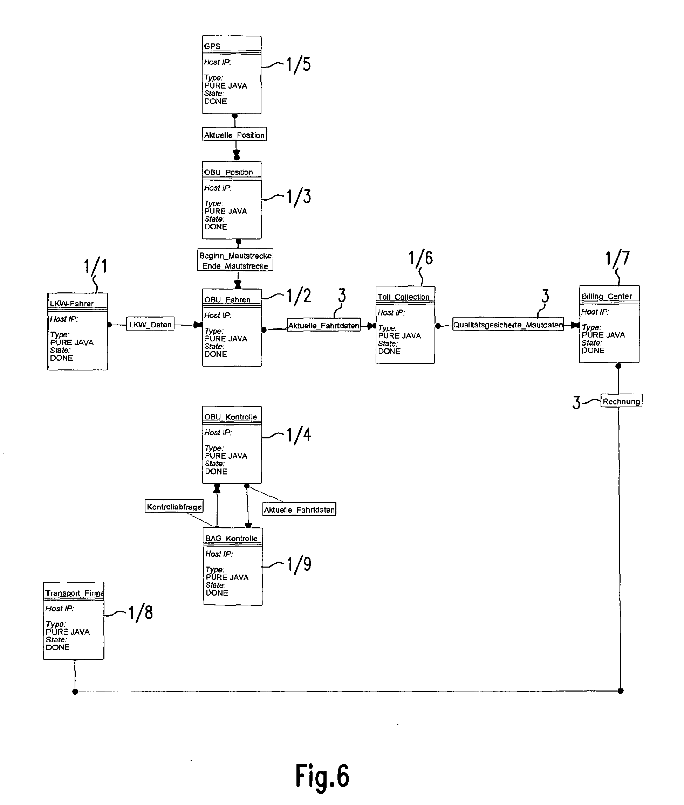

Zur Erläuterung der Erfindung ist in Fig. 6 ein Diagramm eines vereinfachten Prozesses zur automatischen Erfassung der Lkw-Maut auf deutschen Autobahnen dargestellt. Das erfindungsgemäße Verfahren ist jedoch für wesentlich komplexere Prozesse vorgesehen.

Der in Fig. 6 dargestellte Prozess umfasst neun Subjekte 1, die jeweils durch ein rechteckiges Kästchen dargestellt sind. In der ersten Zeile eines jeden Kästchens der Subjekte 1 ist jeweils der Name des Subjektes angegeben. Die Subjekte heißen: Lkw-Fahrer, GPS, OBU_Position, OBU_Fahren, OBU_Kontrolle, Toll_Collection_Center, Billing_Center, BAG_Kontrolle und Transport_Firma.

Das Subjekt Lkw-Fahrer stellt die natürlich Person des Lkw-Fahrers dar, der zur Erfassung der Lkw-Maut an einer sogenannten On-board-unit (OBU) die Daten seines Lkws, wie z.B. Achszahl, Schadstoffklasse, Kostenstelle einzugeben hat. Die On-board-unit ist in diesem Prozess durch drei Subjekte dargestellt, nämlich OBU_Fahren 1/2, OBU_Position 1/3 und OBU_Kontrolle 1/4. Das Subjekt OBU_Position 1/3 steht in Verbindung mit dem Subjekt GPS 1/5, das einen GPS-Empfänger zur Erfassung der aktuellen Position des Lastkraftwagens darstellt. Aus der aktuellen Position des Subjektes GPS 1/5 erzeugt das Subjekt OBU_Position 1/3 eine Nachricht, dass die kostenpflichtige Mautstrecke beginnt (Beginn_Mautstrecke) bzw. endet (Ende_Mautstrecke), die an das Subjekt OBU_Fahren 1/2 gesendet wird. Nach dem vollständigen Abfahren einer Mautstrecke sendet das Subjekt OBU_Fahren ½ die aktuellen Fahrdaten an das Subjekt Toll_Collection_Center 1/6, das die Zentrale der mit der Mauterfassung beauftragten Firma darstellt. Hier wird eine Qualitätssicherung der empfangenen Daten durchgeführt, insbesondere Plausibilitätsprüfungen vorgenommen, um eventuelle Missbräuche aufzudecken. Die derartig qualitätsgesicherten Mautdaten werden von dem Subjekt Toll_Collection_Center 1/6 an das Subjekt Billing_Center 1/7 weitergeleitet. Das Subjekt Billing_Center 1/7 erzeugt eine Rechnung und schickt diese an die Transportfirma, die in diesem Prozess durch das Subjekt Transport_Firma 1/8 dargestellt ist. Auf einer mautpflichtigen Autobahn befindliche Lkws werden von der Bundesautobahngesellschaft kontrolliert, indem ein Fahrzeug der Bundesautobahngesellschaft neben einem Lkw fährt und mittels eines Funkgerätes eine Kommunikation zur On-board-unit aufbaut und dessen Zustand und Daten abfragt. Diese Kontrolleinheit ist in einem vorliegenden Diagramm für das Subjekt BAG_Kontrolle 1/9 dargestellt, die mit dem Subjekt OBU_Kontrolle 1/4 kommunizieren kann, das Bestandteil der On-board-unit ist.

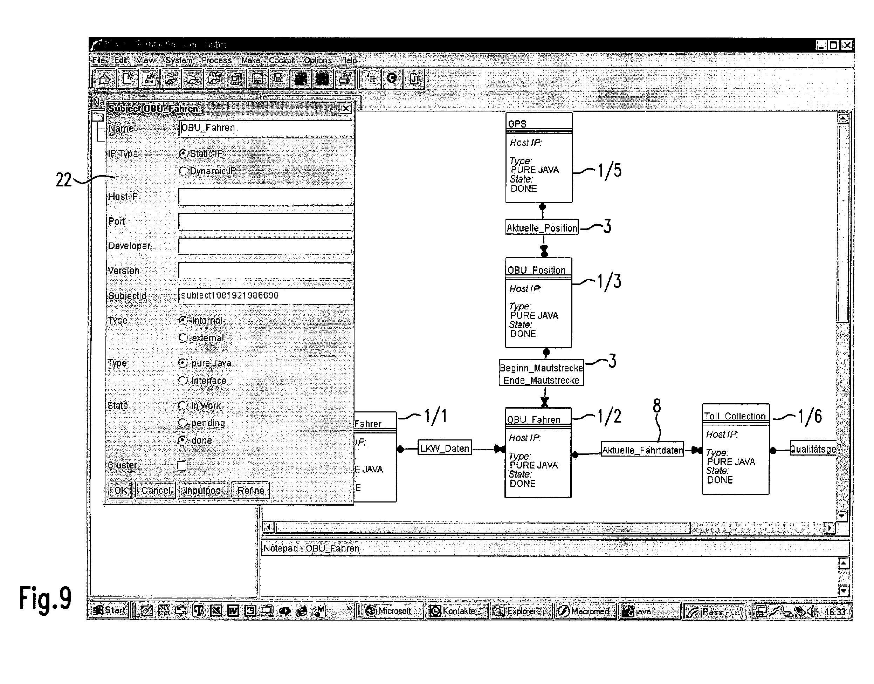

Die Erzeugung eines solchen Diagramms wird von einem Prozess-Manager unterstützt (Fig. 9), der auf einen Doppelklick an einer Taste der Computermaus eine Funktion "neues Subjekt" bereitstellt, bei deren Aufruf ein neues Subjekt 1 erzeugt wird, wobei in einem zusätzlichen Fenster 22 der Benutzer einige Parameter, wie z.B. den Namen des Subjektes, eingeben kann. Hat der Benutzer die entsprechenden Parameter eingegeben, dann kann er das Subjekt am Bildschirm mittels einer Computermaus an eine beliebige Stelle verschieben. Die Kommunikation zwischen den einzelnen Subjekten wird einfach durch Zeichnen eines Pfeils 2 von einem Subjekt zu einem weiteren Subjekt eingegeben, in dem mit der Computermaus zunächst das Subjekt 1 durch gleichzeitiges Drücken zweier Tasten der Computermaus angeklickt wird, von dem die Nachricht gesendet wird, und der Mauszeiger auf dem Subjekt bewegt wird, das die Nachricht empfängt. Wird nun eine Maustaste angeklickt, wird der entsprechende Pfeil zwischen den beiden Subjekten automatisch am Bildschirm gezeichnet und ein kleines Kästchen 3 geöffnet, in das der Benutzer den Namen der Nachricht einzutragen hat, wie z.B. Lkw_Daten oder aktuelle_Fahrdaten (Fig. 6, 9).

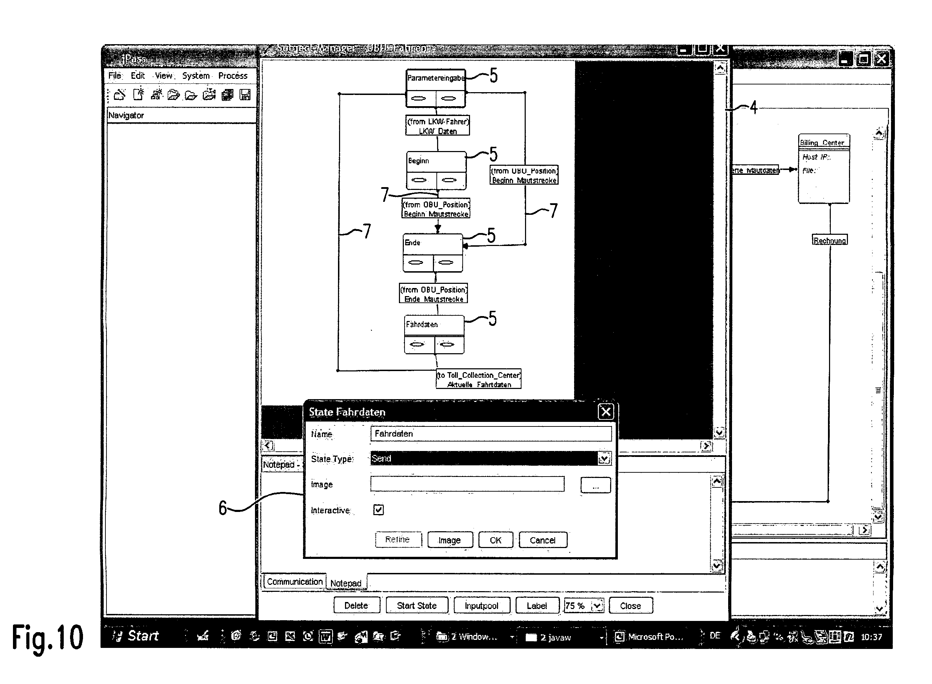

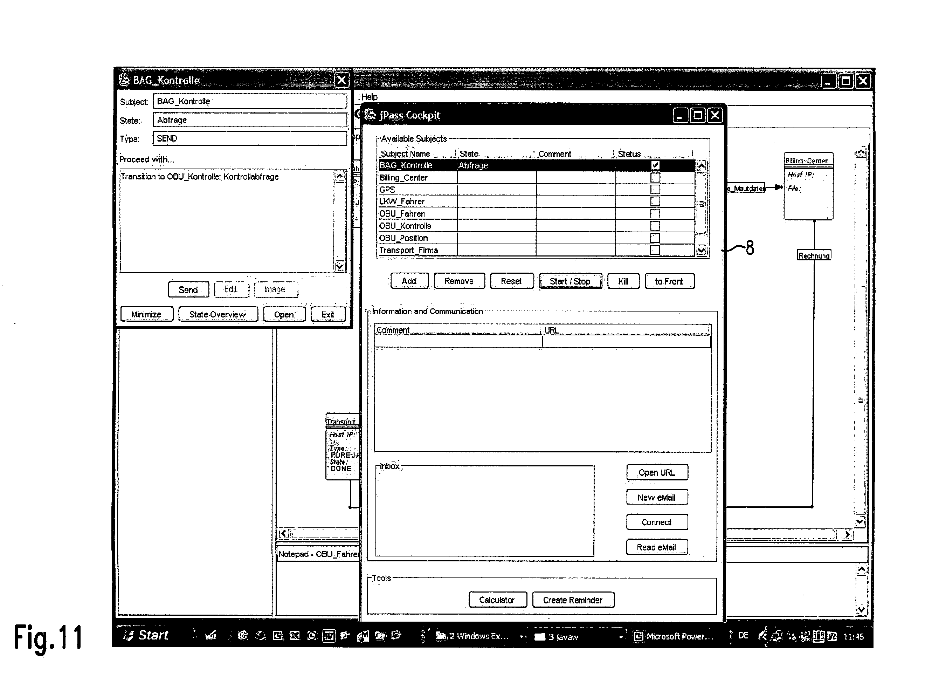

Durch ein Doppelklicken an einem Subjekt wird ein Subjektmanager 4 (Fig. 10: Subjektmanager für OBU_Fahren) gestartet, der in einem Fenster einzelne von einem bestimmten Subjekt auszuführende Funktionen 5 zeigt. Diese Funktionen 5 können in diesem Fenster eingegeben und editiert werden. Diese Funktionen 5 sind ausschließlich SENDEN, EMPFANGEN und TUN. Durch Doppelklick wird eine neue Funktion eingeführt und ein entsprechendes Fenster 4 dargestellt. Gleichzeitig öffnet sich ein entsprechendes Eingabefenster 6, in welchem der Name der Funktion, der Typ der Funktion und weitere Parameter festgelegt werden können. In Fig. 11 ist das entsprechende Eingabefenster 6 zur Funktion Fahrdaten geöffnet, wobei diese Funktion 5 eine SENDE-Funktion ist, wie es bei "state type": mit "send" angegeben ist. Die weiteren hier angegebenen Funktionen 5 "Parametereingabe", "Beginn" und "Ende" sind EMPFANGS-Funktionen. Die Kommunikation zwischen den einzelnen Funktionen kann wiederum durch Pfeile 7 wie im Prozessdiagramm dargestellt werden, wobei jeweils ein kleines Kästchen geöffnet wird, in dem bei SENDE-Funktionen der Name und der Empfänger der zu übertragenden Nachricht eingetragen ist und bei EMPFANGS-Funktionen der Name des entsprechenden Senders und der Nachricht eingetragen ist, auf welche die EMPFANGS-Funktion wartet. Es ist auch möglich, dass eine EMPFANGS-Funktion Nachrichten von unterschiedlichen Sendern empfangen kann, wie z.B. die Funktion "Parametereingabe", die sowohl die Lkw_Daten vom Lkw-Fahrer als auch die Nachricht Beginn_Mautstrecke von der OBU_Position empfangen kann.

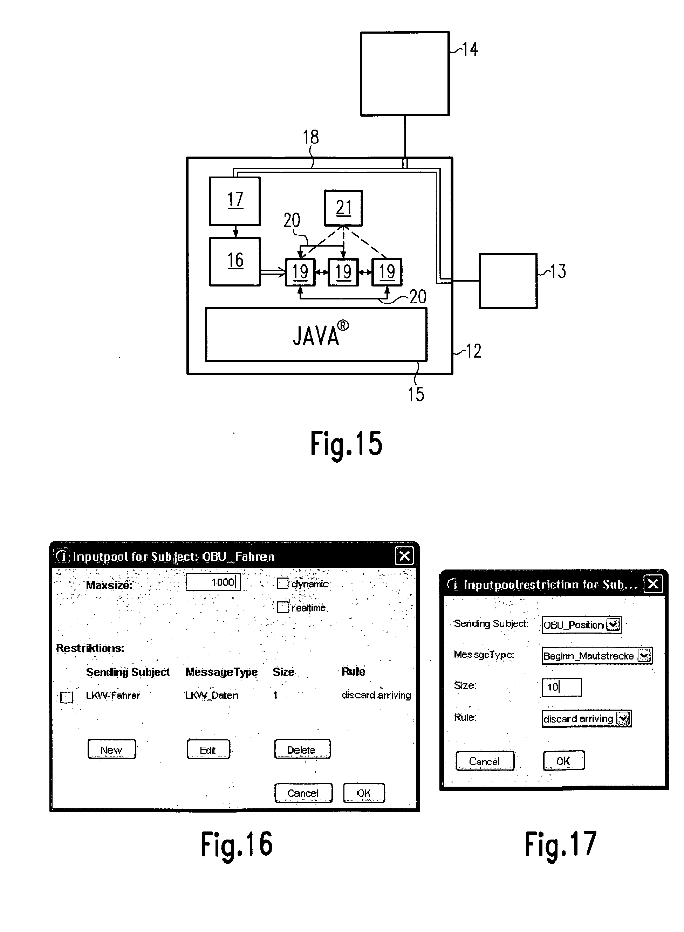

Durch Betätigen der Schaltfläche "Inputpool" im Subjektmanager wird ein Fenster zum Eingeben von Inputpool Definitionen geöffnet (Fig. 16). Der Inputpool ist auf eine Empfangskapazität von 1000 Nachrichten voreingestellt (Default-Wert). Mit diesem Fenster kann die maximale Anzahl der empfangbaren Nachrichten eingestellt werden.

Durch Betätigen der Schaltfläche "New" wird ein weiteres Fenster (Fig. 17) zum Eingeben von Inputpool-Restriktionen geöffnet. Hier kann für einen jeden Sender (hier: LKW-Fahrer bzw. OBU_Position) bzw. einen jeden Nachrichtentyp (hier: LKW_Daten bzw. Beginn_Mautstrecke) eine Empfangskapazität reserviert werden. Hierzu werden in den Feldern "Sending Subject" und ggfs. "MessageType" der Sender bzw. der Nachrichtentyp und die Anzahl der Nachrichten, die im Inputpool für diesen Sender bzw. diesen Nachrichtentyp reserviert sind, eingegeben. Hierbei ist wichtig, dass in einem Inputpool für unterschiedliche Sender bzw. unterschiedliche Nachrichtentypen gleichzeitig unterschiedliche Anzahlen von empfangbaren Nachrichten festlegbar sind. Hierdurch wird für einen jeden Sender bzw. einen jeden Nachrichtentyp eine separate Empfangskapazität im Inputpool reserviert. Diese Empfangskapazitäten bilden somit voneinander unabhängige Partitionen des Inputpools. Dadurch ist sichergestellt, dass ein bestimmter Sender den Inputpool nicht alleine vollständig füllen kann, sondern für bestimmte Sender bzw. bestimmte Nachrichtentypen eine vorbestimmte Partition unabhängig vom Nachrichtenaufkommen anderer Sender zur Verfügung steht.

Weiterhin kann in dem Feld "Rule" festgelegt werden, wie neue Nachrichten dieser Partition behandelt werden sollen, falls die jeweilige Partition voll ist. Als voreingestellter Standardwert ist "blocked" eingegeben, d.h., neue Nachrichten werden nicht angenommen, wenn diese Partition voll ist. Alternativ können die Werte "discard arriving", "replace newest" oder "replace oldest" eingegeben werden. Bei "discard arriving" werden die neu eingehenden Nachrichten gelöscht, wenn die Partition voll ist. Bei "replace oldest" wird die jeweils älteste Nachricht dieser Partition durch die neue Nachricht ersetzt, wenn die Partition voll ist. Bei "replace newest" wird die jeweils jüngste Nachricht dieser Partition durch die neue Nachricht ersetzt, wenn die Partition voll ist.

Zu jedem Subjekt können mit dem Subjektmanager die in dem Subjekt auszuführenden Funktionen in entsprechender Weise festgelegt werden. Das vollständige Subjektdiagramm zum Subjekt OBU_Fahren ist im Subjekt-Manager in Fig. 10 dargestellt.

Beim Erzeugen des Prozessdiagramms und der einzelnen Subjektdiagramme wird automatisch eine Prozessdatei in einer Metasprache erzeugt.

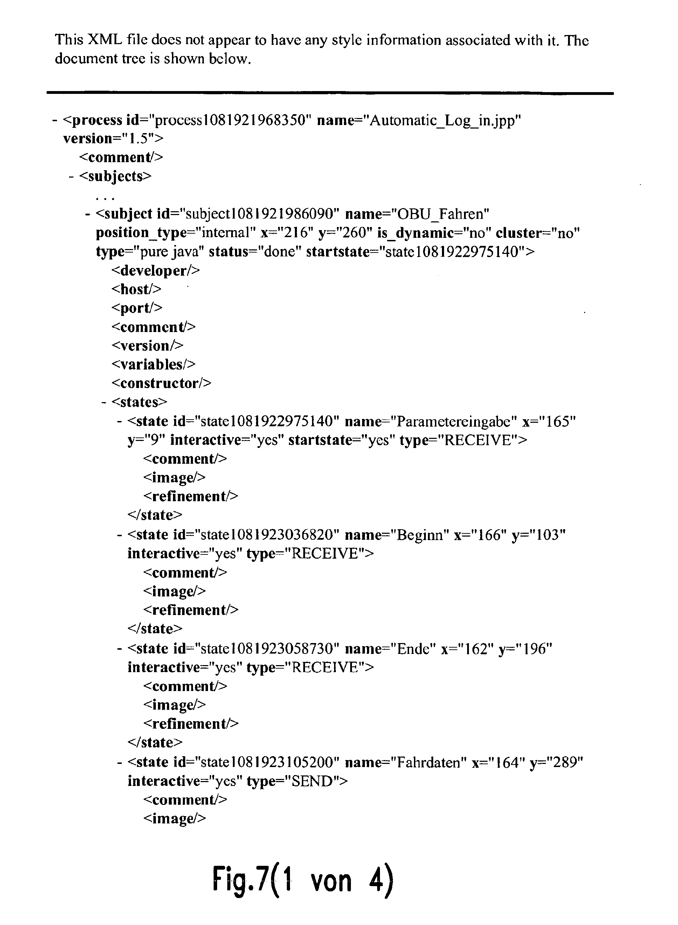

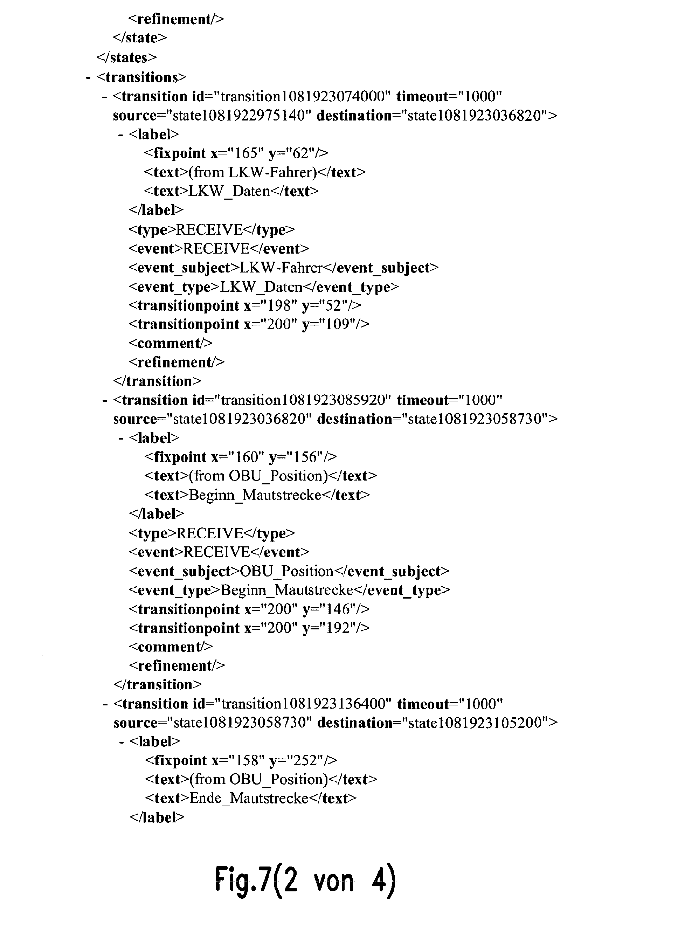

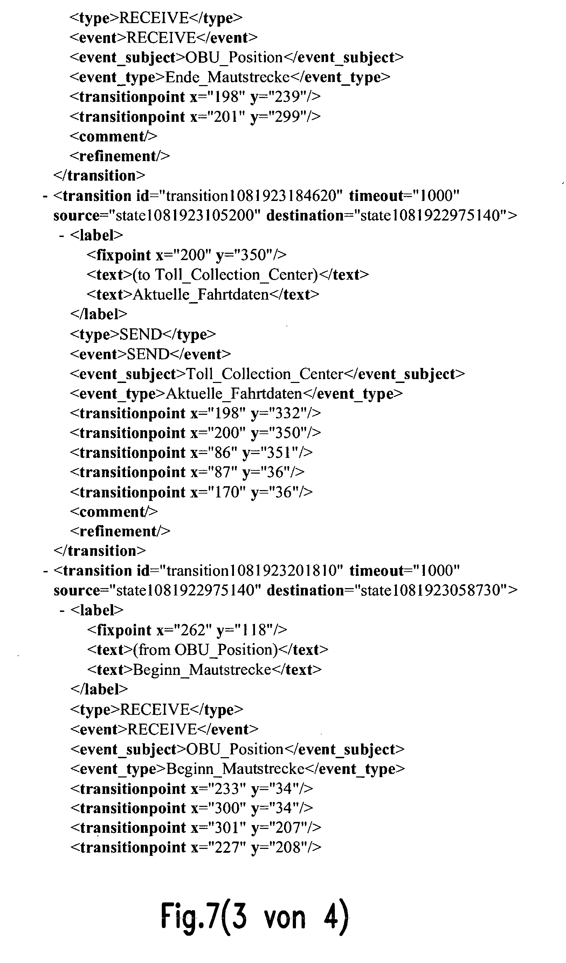

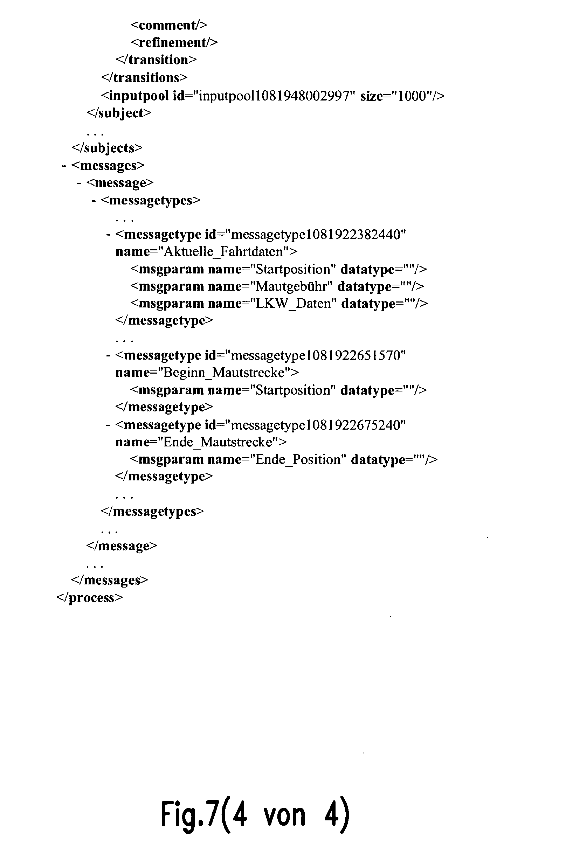

Fig. 7 zeigt einen Ausschnitt der Prozessdatei für das Beispiel der automatischen Mauterfassung. Diese Prozessdatei hat den Namen "Automatic_Log_in.jpp". Diese Datei enthält die Daten zum Subjekt OBU_Fahren. In der Prozessdatei ist für jedes Subjekt ein entsprechender Datensatz vorgesehen. Ein solcher Datensatz umfasst den Namen des Subjekts ("OBU_Fahren", eine Subjektnummer ("subject 1081921986090"), Angaben zu dem Computer, an dem das Subjekt zur Ausführung gebracht werden soll, mit statischer oder dynamischer IP-Adresse, gegebenenfalls die IP-Adresse des Servers), optionale Angaben wie den Namen des Entwicklers und der Version. Des weiteren kann das Subjekt vom internen (internal) und externen (external) Typ sein, wobei ein Subjekt des internen Typs bedeutet, dass es Gegenstand des Prozesses ist, mit dem es kommuniziert und vom externen Typ bedeutet, dass aus einem anderen Prozess zu diesem Subjekt eine Datenverbindung aufgenommen wird, zu dem das Subjekt nicht gehört.

Das externe Subjekt kann Bestandteil eines weiteren Prozesses sein, der wiederum mehrere Subjekte umfasst, die miteinander kommunizieren. Mit einem solchen externen Subjekt ist es deshalb möglich, mehrere bestehende Prozesse aneinander zu koppeln.

Wenn ein bestimmter Prozess mit einem weiteren Prozess kommuniziert, kann auch im Rahmen der Simulation der weitere Prozess lediglich durch ein einzelnes externes Subjekt simuliert werden. D.h., dass von dem weiteren Prozess nur das externe Subjekt besteht. Für den Prozess, der mit dem weiteren Prozess kommuniziert, simuliert dieses externe Subjekt die Kommunikation zu und von dem weiteren Prozess, wodurch für den ursprünglichen Prozess der weitere Prozess alleine durch ein einzelnes externes Subjekt simuliert wird. Hiermit kann die Kommunikation zwischen unterschiedlichen Prozessen simuliert werden, ohne dass alle Prozesse vollständig erstellt werden müssen.

Weiterhin kann der Typ des Subjektes durch selbständig lauffähig (pure Java) bzw. als nicht selbständig lauffähig (interface) gekennzeichnet sein. Falls das Subjekt nicht selbständig lauffähig ist, wird eine Schnittstelle erzeugt, die von anderen Programmen verwendet werden kann, um mit dem Subjekt zu kommunizieren.

Ein Subjekt kann Bestandteil eines Clusters sein, wie z.B. in einem Prozess, bei dem mehrere on board units zu berücksichtigen sind. Hier wird das Subjekt OBU_Fahren z.B. einmal erstellt und mehrfach kopiert, wobei alle Subjekte OBU_Fahren dann ein Cluster bilden.

Weiterhin sind die zu versendenden Nachrichten durch Angabe des Nachrichtenempfängers, durch den Namen der Nachricht und durch den Namen der einzelnen Nachricht enthaltenden Parameter definiert, von welchen optional der Datentyp und Dateninhalt angegeben werden kann. Für jedes Subjekt wird ein Eingangspuffer und dessen Größe festgelegt. Der Eingangspuffer wird als Inputpool bezeichnet und dessen Größe beträgt standardmäßig 1.000 Nachrichten.

In der Prozessdatei sind die einzelnen Funktionen der Subjekte (Fig. 7, 10: Fahrdaten, Parametereingabe, Beginn und Ende) als states mit ihrer Typbeschreibung (SENDEN, EMPFANGEN, TUN = SEND, RECEIVE, DO) sowie der Angabe, ob beim Aufrufen dieser Funktion ein bestimmtes Bild einer bestimmten Bildquelle (image source) dargestellt werden soll, aufgeführt. Eine der Funktionen (in Fig. 7: Parametereingabe) ist in der Prozessdatei als Startfunktion angegeben, d.h., diese Funktion ist die erste Funktion, die beim Aufrufen des Subjekts ausgeführt wird. Das Vorsehen einer Startfunktion erlaubt beim Editieren von Funktionen eines Subjekts einfach den Beginn der Ausführungen von einer Funktion auf eine weitere Funktion zu verändern. Hierzu muss lediglich die entsprechende Funktion im Subjektmanager angeklickt und der Befehl "Start State" (siehe Fig. 10 unten) betätigt werden.

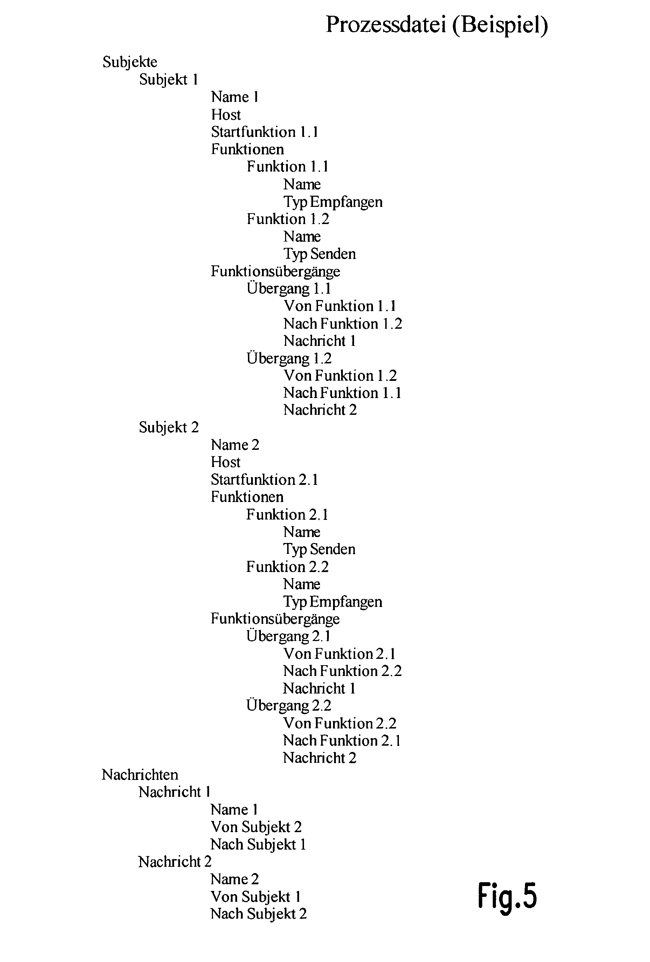

Fig. 5 zeigt schematisch vereinfacht den Aufbau einer derartigen Prozessdatei für zwei Subjekte, Subjekt 1 und Subjekt 2, die jeweils zwei Funktionen, nämlich Funktion 1.1 und Funktion 1.2 bzw. Funktion 2.1 und Funktion 2.2 aufweisen. Die Funktionen 1.1 und 2.2 sind vom Typ EMPFANGEN und die Funktionen 1.2 und 2.1 sind vom Typ SENDEN. Mit diesen Funktionen werden die Nachrichten Nachricht 1 und Nachricht 2 ausgetauscht.

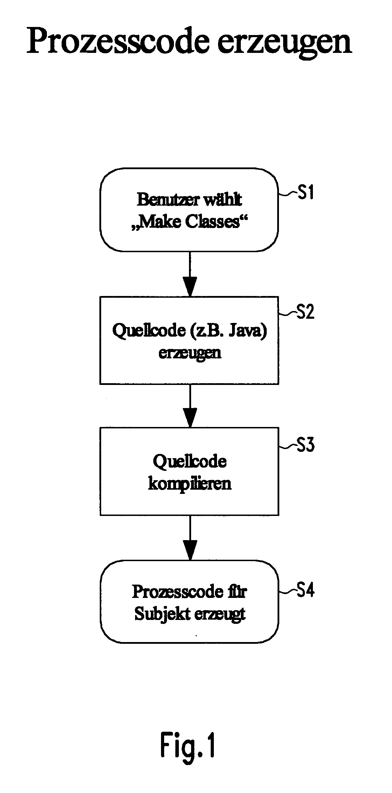

Nachfolgend wird an einem Beispiel das erfindungsgemäße Verfahren erläutert, bei dem ein Quellcode in der Programmiersprache Java® erzeugt wird. Ein Benutzer kann das Verfahren durch den Befehl "Make Classes" starten (Schritt S1 in Fig. 1). Danach wird im Schritt S2 eine Methode zum Erzeugen des Quellcodes aufgerufen, die unten näher erläutert wird.

Der erzeugte Quellcode wird in einem Prozessorcode compiliert (S3). Wenn der Prozessorcode für ein Subjekt vorliegt, dann ist dieser Verfahrensabschnitt beendet (S4).

Erfindungsgemäß wird für jedes Subjekt ein separater Quellcode erzeugt. Hierdurch werden sehr komplexe Prozesse in einzelne Teilprozesse zerlegt, für welche einfach ein Quellcode erzeugbar ist.

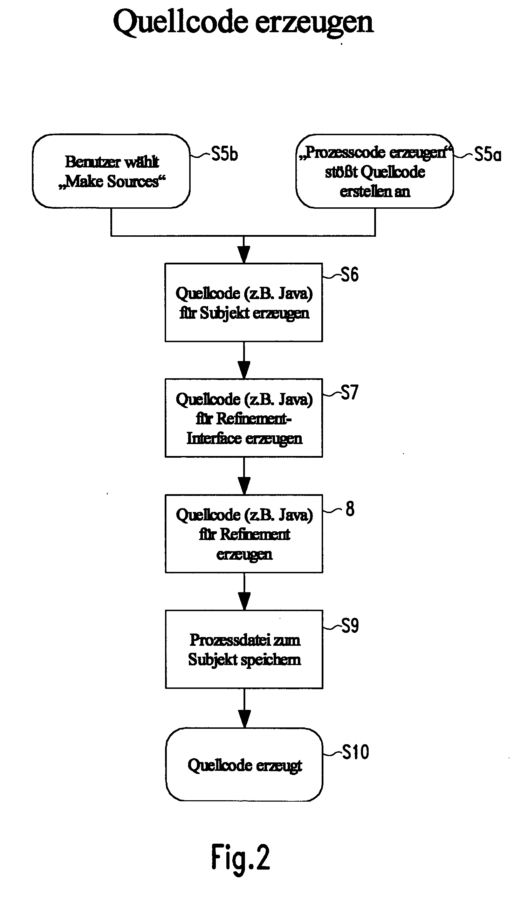

Nachfolgend wird anhand von Figur 2 der Verfahrensschritt S2 (Quellcode erzeugen) näher erläutert. Die Methode Quellcode erzeugen kann entweder durch Aufruf in der Methode Prozessorcode erzeugen (S5a) oder durch den Benutzer durch Aufrufen des Befehls "Make Sources" (S5b) gestartet werden. Im Schritt S6 wird die Methode "Quellcode für Subjekt erzeugen" aufgerufen, mit welcher der Quellcode für ein Subjekt erzeugt wird. Diese Methode wird unten näher erläutert. Die in Figur 2 darauf folgenden Schritte S7 und S8 sind optional, wobei der Schritt S7 das Erzeugen eines Quellcodes für ein Refinement-Interface betrifft und der Schritt S8 den Quellcode für ein Refinement betrifft. Als Refinement werden manuell programmierte Programmabschnitte bezeichnet, die den automatisch erzeugten Programmabschnitten hinzugefügt werden. Hierzu wird ein Interface vorgesehen (S7), mit welchem der manuell erzeugte Programmabschnitt an den automatisch erzeugten Programmabschnitt gekoppelt wird.

Im Schritt S9 wird die Prozessdatei, bzw. eine Kopie davon, zu dem jeweiligen Subjekt gespeichert, für das der Quellcode erzeugt wird. Hiermit ist das Verfahren zum Erzeugen des Quellcodes beendet (S10).

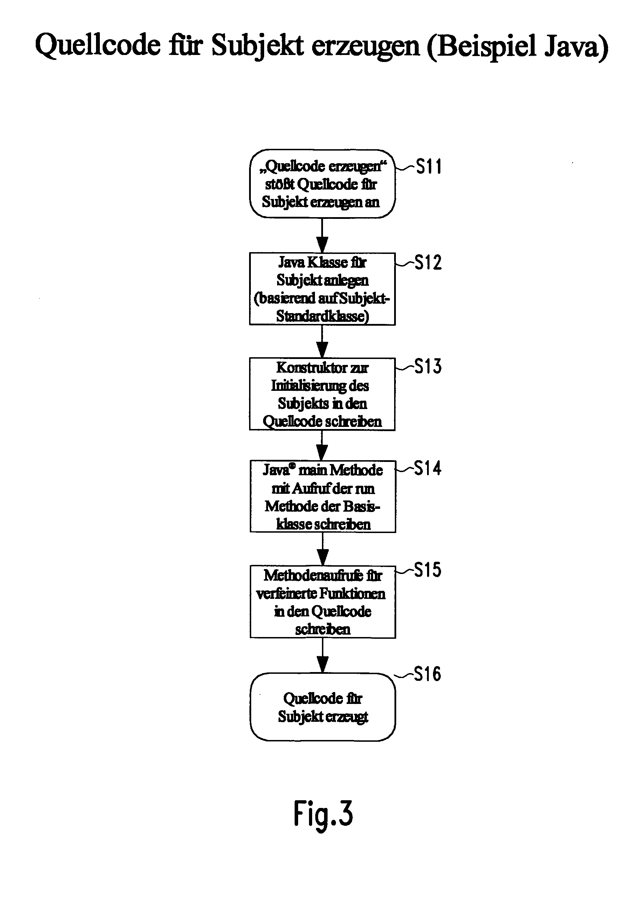

Die einzelnen Verfahrensschritte der Methode "Quellcode für Subjekt erzeugen" sind in Fig. 3 dargestellt. Diese Methode beginnt mit dem Schritt S11.

Im Schritt S12 wird eine Java®-Klasse für ein Subjekt angelegt. Dieser Java®-Klasse werden die Methoden einer vorprogrammierten Standardklasse vererbt, die durch eine Reihe von Methoden ergänzt ist. Diese Klasse wird als "subject" bezeichnet und ist in der Anlage A dargestellt.

Im Schritt S13 wird eine Quellcodedatei initialisiert, d.h., dass eine Methode zur Initialisierung der Klasse in den Quellcode geschrieben wird. Diese Methode wird in Java® als Konstruktor bezeichnet. In diesem Konstruktor werden der Prozessdateiname und die Subjekt-ID eingetragen.

Im Schritt S14 wird in den Quellcode die Java®-Methode "main" eingetragen. In dieser main-Methode ist ein Aufruf einer run-Methode enthalten, die von der in Anlage A dargestellten Klasse ererbt worden ist.
Optional können auch Methodenaufrufe für Refinement-Funktionen in den Quellcode geschrieben werden (S15). Mit dem Schritt S16 ist dieser Verfahrensabschnitt beendet.

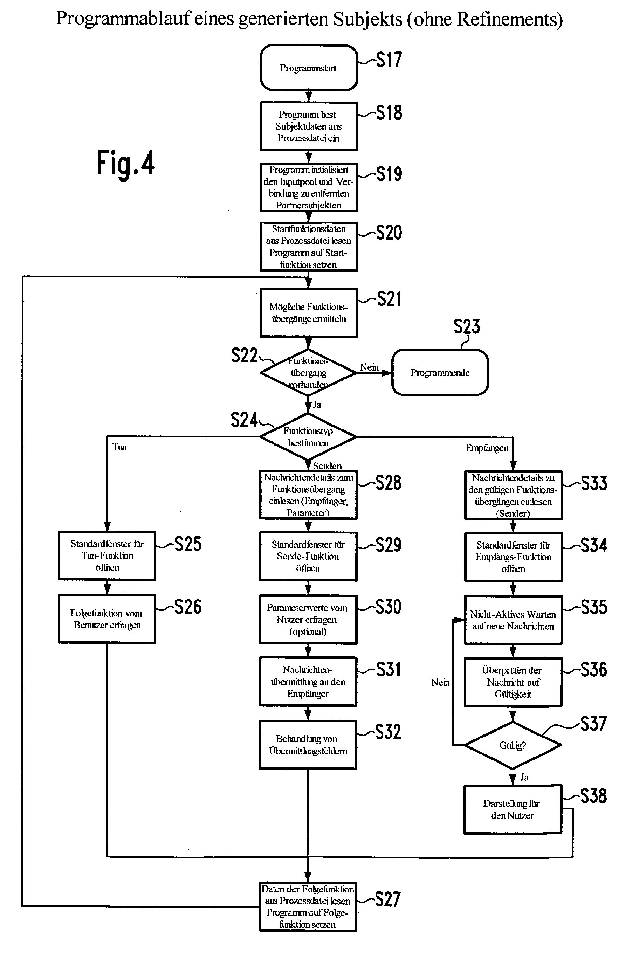

Nachfolgend wird der Programmablauf beim Aufrufen des oben erläuterten und automatisch erzeugten Quellcodes für ein Subjekt ohne Refinements anhand des Flussdiagramms aus Fig. 4 erläutert. Das Programm wird mit dem Schritt S17 gestartet. Im Schritt S18 werden Subjektdaten aus der Prozessdatei gelesen.

Im Schritt S19 wird ein Inputpool und Verbindungen zu entfernten Partnersubjekten initialisiert. Der Inputpool ist ein Puffer. Dieser Puffer wird für jedes Subjekt angelegt und dient zum Empfangen von Daten. Die Initialisierung der Verbindungen zu Partnersubjekten erfolgt durch Anlegen eines Remote-Subjekts für das entsprechende Subjekt, das lediglich zum Senden der Daten zu einem anderen, bestimmten Subjekt dient. Das Remote-Subjekt schreibt somit zu übertragende Daten in den Inputpool eines weiteren Subjektes.

Alle folgenden Verfahrensschritte werden von der oben angegebenen Methode "run" ausgeführt.

Im Schritt S20 werden zunächst aus der Prozessdatei die Daten der Startfunktion gelesen und das Programm auf die Startfunktion gesetzt.

Im Schritt S21 werden mögliche Funktionsübergänge zu weiteren Funktionen ermittelt. In einer Abfrage (S22) wird geprüft, ob derartige Funktionsübergänge vorhanden sind. Sind keine Funktionsübergänge vorhanden, wird das Programm beendet (S23). Sind Funktionsübergänge vorhanden, so wird in der Abfrage S24 der Funktionstyp bestimmt. Es gibt lediglich drei Funktionstypen, nämlich TUN, SENDEN und EMPFANGEN. Ist die Funktion eine TUN-Funktion, so geht der Verfahrensablauf auf den Schritt S25 über. Im Schritt S25 wird ein Standardfenster für die TUN-Funktion geöffnet. In diesem Standardfenster wird der Nutzer beim Vorliegen von mehreren Funktionsübergängen gefragt, welche Funktion folgen soll (S26). Hierdurch wird somit die Handlung des Subjekts durch eine Abfrage bzw. eine Entscheidung des Benutzers ersetzt.

Vom Schritt S26 geht der Verfahrensablauf auf den Schritt S27 über, in dem aus der Prozessdatei die Daten der nächsten Funktion ausgelesen werden und das Programm auf die nächste Funktion gesetzt wird. Der Prozessablauf geht dann wieder auf den Schritt S21 zurück.

Hat die Abfrage in Schritt S24 ergeben, dass die Funktion eine SENDEN-Funktion ist, so werden im Schritt S28 aus der Prozessdatei die Daten zur Übertragung der Nachricht, nämlich der Name der Nachricht, der Empfänger und optionale Parameter eingelesen.

Im Schritt S29 wird ein Standardfenster für die SENDE-Funktion geöffnet.

Mit dem optionalen Schritt S30 können vom Benutzer Parameterwerte erfragt werden, die mit der Nachricht übermittelt werden sollen. Im Schritt S31 werden die Nachrichten an den Empfänger übermittelt, d.h. dass sie von dem Subjekt an das Remote-Subjekt weitergegeben werden, das die Daten in den Input-Pool des Empfängers schreibt.

Im Schritt S32 werden Übermittlungsfehler behandelt, falls solche auftreten sollten. Die Behandlung von Übermittlungsfehlern erfolgt zum Teil auch im Remote-Subjekt.

Der Verfahrensablauf geht hier wieder auf den Schritt S27 über, in dem die Daten der folgenden Funktion aus der Prozessdatei gelesen und das Programm auf diese Funktion gesetzt wird.

Ergibt die Abfrage in Schritt S24, dass die Funktion eine EMPFANGEN-Funktion ist, so geht der Verfahrensablauf auf den Schritt S33 über. Im Schritt S33 werden die Daten zu der gültigen Nachricht, nämlich der Name des Senders entsprechend dem gültigen Funktionsübergang eingelesen.

Danach wird ein Standardfenster für die EMPFANGS-Funktion geöffnet (S34).

Im Schritt S35 wird ein Nicht-aktives Warten auf die entsprechende Nachricht initiiert. Das Nicht-aktive Warten beruht auf dem sog. Monitorkonzept, das bereits im Oktober 1974 von Hoare C.A.R. in dem Artikel "Monitors: An operating system structuring concept" in Commun. ACM 17,10 beschrieben ist. Vereinfacht kann dieses MonitorKonzept als eine Verschiebung der Warte-Funktion von der Programmebene in die Betriebssystemebene bzw. Prozessorebene dargestellt werden. Wesentlich ist, dass durch dieses Monitorkonzept verhindert wird, dass eine Vielzahl von Tasks in einem Multitasking-System gleichzeitig aktiv sind und immer wieder Prozessorleistung zum Ausführen des Wartens beanspruchen. Durch das Monitorkonzept wird das Warten von einer Vielzahl von Tasks von lediglich einer einzigen Betriebssystem-Task überwacht. Dieses Monitorkonzept erlaubt auf einfache Art und Weise, dass eine Vielzahl von Programmen bzw. Tasks parallel nebeneinander ablaufen und auf Daten von einer jeweils anderen Task bzw. einem jeweils anderen Programm warten, ohne dass hierdurch die Prozessorleistung nennenswert beeinträchtigt wird. In Java ist das Monitorkonzept durch die Methoden "notify", "notifyAll" und "wait" implementiert. Diese Methoden werden auch von der oben angegebenen Methode "run" aufgerufen.

Nach dem Empfang einer Nachricht wird diese aus dem Inputpool im Schritt S36 eingelesen. Danach wird sie auf ihre Gültigkeit überprüft (S37). Ist die Nachricht nicht gültig, so geht der Verfahrensablauf wieder auf den Schritt S35 über. Ist die Nachricht gültig, so wird sie für den Benutzer in dem bereits geöffneten Fenster dargestellt (S38).

Danach geht der Verfahrensschritt wieder auf den Schritt S27 aus, in dem die Daten der folgenden Funktion aus der Prozessdatei ausgelesen werden und das Programm auf die folgenden Funktion gesetzt wird.

Optional ist es auch möglich, wenn ein Subjekt mehrere unterschiedliche Nachrichten empfangen kann, alle empfangenen Nachrichten im Schritt S38 darzustellen. Hierbei ist es jedoch zweckmäßig, dass der Verfahrensablauf auf den Schritt S27 erst übergeht, nachdem der Benutzer eine einzelne der eingegangenen und dargestellten Nachrichten quittiert, da ansonsten nach dem Eingang der ersten Nachricht keine weiteren Nachrichten mehr in der einen EMPFANGEN-Funktion empfangen werden können. Hierzu müssten ansonsten mehrere EMPFANGEN-Funktionen vorgesehen werden.

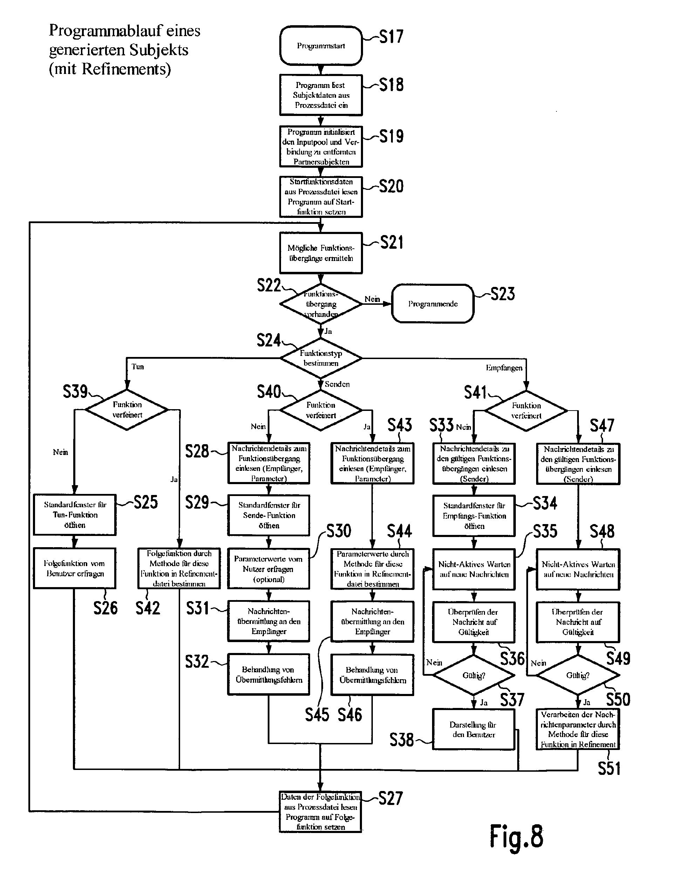

Fig. 8 zeigt den Ablauf eines automatisch erzeugten Quellcodes, dem manuell programmierte Programmabschnitte, die als Refinements bezeichnet werden, hinzu gefügt sind. Dieser Programmablauf entspricht im Wesentlichen dem aus Figur 4, wobei gleiche Verfahrensschritte mit gleichen Bezugszeichen bezeichnet sind. Diese Verfahrensschritte werden zur Vermeidung von Wiederholungen nicht erläutert. Das Verfahren gemäß Figur 8 unterscheidet sich von dem Verfahren gemäß Figur 4 dadurch, dass nach der Abfrage des Funktionstyps im Schritt S24 jeweils eine weitere Abfrage (S39, S40, S41) ausgeführt wird, in der bestimmt wird, ob die Funktion verfeinert ist, das heißt, ob Refinements hinzu gefügt worden sind.

Ist die Funktion vom Typ TUN und liegen Refinements vor, so geht der Verfahrensablauf auf den Schritt S42 über, mit dem zumindest automatisch der Übergang auf die nächste Funktion festgelegt ist. Darüber hinaus kann in diesem Schritt auch ein vorbestimmtes Programm aufgerufen werden. Hierbei können insbesondere Programme aus vorgefertigten Bibliotheken in den Prozess eingebunden werden, die dann ausgeführt werden. Das erfindungsgemäße Verfahren ist somit kombinierbar mit existierenden Programmbibliotheken, die für viele Anwendungen bereits vorhanden sind. Typische Anwendungen sind zum Beispiel die Verwaltung und Abfrage von Datenbanken.

Ist die Funktion vom Typ SENDEN und liegen Refinements vor, so geht der Verfahrensablauf auf den Schritt S43 über, der identisch zu dem oben erläuterten Schritt S28 ist, bei dem aus der Prozessdatei die Daten zur Übertragung der Nachricht, nämlich der Name der Nachricht, der Empfänger und optional Parameter eingelesen werden.

Im Schritt S44 werden Parameterwerte durch eine Methode aus einer Refinement-Datei eingelesen, die mit der Nachricht übermittelt werden soll. Danach werden die Nachrichten zum Empfänger übermittelt (S45) und eventuelle Fehler behandelt (S46). Danach geht der Verfahrensablauf wieder auf den Schritt S27 über.

Ist die Funktion vom Typ EMPFANGEN und liegen Refinements vor, so geht der Verfahrensablauf auf den Schritt S47 über, der dem oben erläuterten Schritt S33 entspricht, bei dem die Daten zu der gültigen Nachricht, nämlich der Name des Senders entsprechend dem gültigen Funktionsübergang eingelesen werden. Die nachfolgenden Schritte S48, S49 und S50 entsprechen den oben beschriebenen Schritten S35, S36 und S37 und dienen zum automatischen Empfang und zum Überprüfen der Gültigkeit der jeweiligen Nachricht. Im Schritt S51 wird eine durch die Refinement-Datei bestimmte Methode zur Verarbeitung der empfangenen Nachrichten aufgerufen. Danach geht der Verfahrensablauf wieder auf den Schritt S27 über.

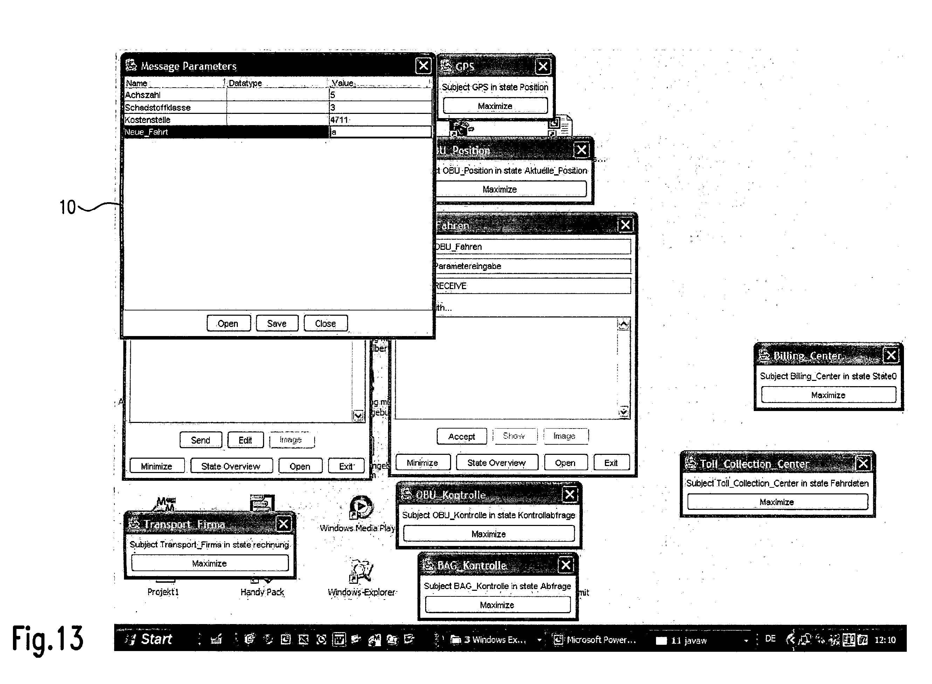

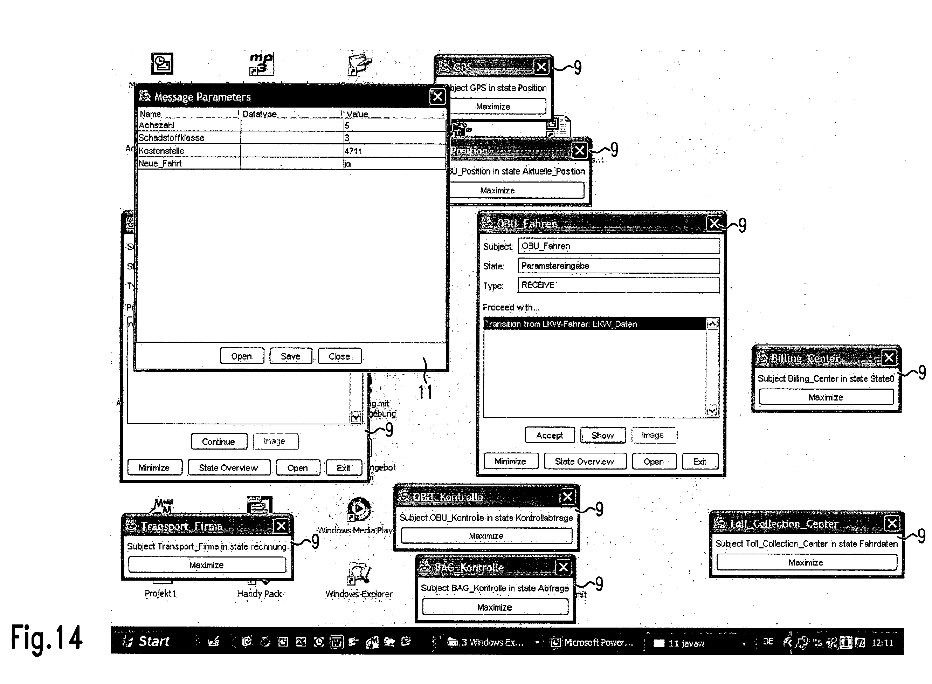

Nachfolgend wird an Hand der Figuren 11 bis 14 die Validierung des gemäß dem erfindungsgemäßen Verfahrens erzeugten Quellcodes erläutert. Zum Ausführen des Validierungsvorganges ist ein separates Validierungsprogramm vorgesehen (Fig. 11), das als "jPass Cockpit" bezeichnet wird. In Figur 11 ist ein Fenster 8 des Validierungsprogrammes geöffnet. Mit diesem Validierungsprogramm können die Quellcode der einzelnen Subjekte gestartet, gestoppt, zurück gesetzt und gelöscht werden. Zur Durchführung des Validierungsverfahrens ist ein solches Validierungsprogramm nicht notwendig. Es vereinfacht jedoch das gleichzeitige Starten von den unterschiedlichen Quellcoden, die auch als unterschiedliche Teilprogramme bezeichnet werden können. Da in diesem Validierungsprogramm die einzelnen Subjekte individuell ausgewählt werden können, ist es möglich, auch nur einen Teil eines Prozesses zu starten und zu validieren.

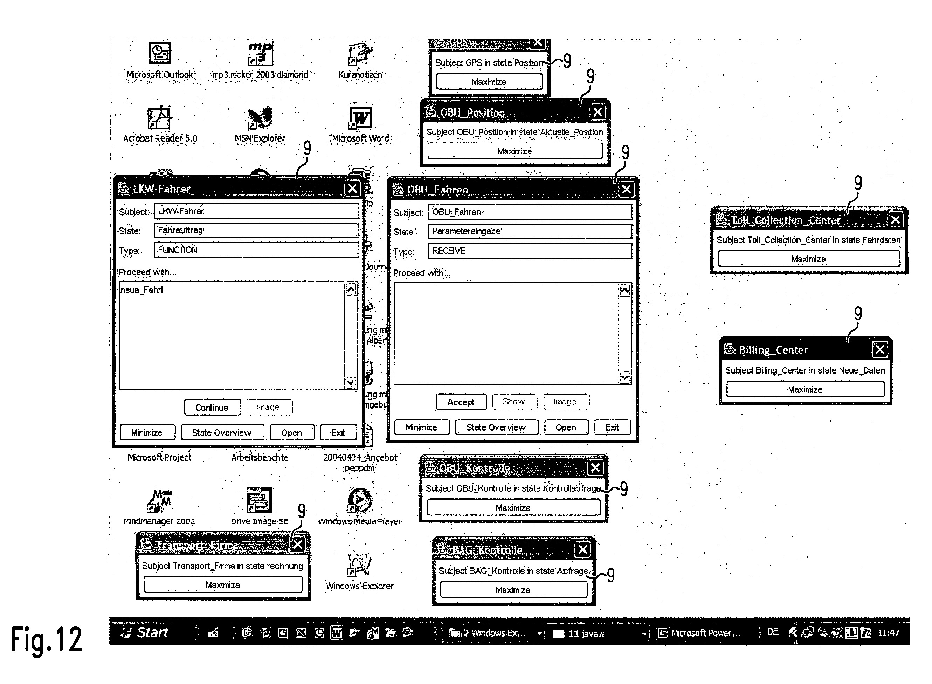

Wenn die Quellcode der Subjekte gestartet worden sind, wird für jedes Subjekt ein Fenster 9 geöffnet, in dem oben der Name des Subjektes angegeben ist. In Figur 12 sind die Fenster aller Subjekte des in Figur 6 gezeigten Prozesses geöffnet, das heißt, dass alle Quellcode gestartet sind. In der obersten Leiste in den Fenstern ist jeweils der Name des Subjektes angezeigt. Grundsätzlich sind die Fenster minimiert. In Figur 12 sind das die Fenster GPS, OBU_Position, Toll_Collection_Center, Billing_Center, OBU_Kontrolle, BAG_Kontrolle und Transport_Firma. In diesen Fenstern ist auch angegeben, welche Funktion zur Zeit von dem jeweiligen Subjekt ausgeführt wird. So wird von dem Subjekt Toll_Collection_Center die Funktion "FAHRDATEN" ausgeführt. Dies ist eine Funktion des Typs EMPFANGEN, mit welcher auf die Übermittlung von Fahrdaten gewartet wird. In den minimierten Fenstern ist jeweils eine Schaltfläche "Maximize" angegeben, die mit der Maus betätigt wird, wodurch die Fenster in einer maximierten Darstellung überführt werden. Die Fenster der Subjekte LKW-Fahrer und OBU_Fahren sind in der maximierten Darstellung gezeigt.

Wenn von einem Subjekt eine Nachricht versendet wird oder empfangen wird, geht das entsprechende Fenster automatisch in den maximierten Zustand über.

Bei dem Zustand des Systems in Figur 12 wird der Benutzer im Fenster LKW-Fahrer gefragt, ob eine neue_Fahrt ausgeführt werden soll. Bestätigt er dies an der Schaltfläche "continue", so wird im Subjekt LKW-Fahrer die nächste Funktion ausgeführt, mit welcher der Benutzer aufgefordert wird, die entsprechenden Daten, wie zum Beispiel Achszahl, Schadstoffklasse, Kostenstelle und einen logischen Wert für die neue Fahrt einzugeben. Ist die Eingabe abgeschlossen, wird die Nachricht automatisch an das Subjekt OBU_Fahren gesandt und im entsprechenden Fenster als "transition from LKW-Fahrer: LKW_Daten" dargestellt. Mit der Schaltfläche "show" kann ein weiteres Fenster 11 zur Darstellung der Nachricht aufgemacht werden. Mit der Schaltfläche "accept" kann die Nachricht akzeptiert werden, womit im Subjekt OBU_Fahren die Funktion Parametereingabe auf die Funktion Beginn (siehe Fig. 10) übergeht, da die LKW_Daten vom LKW-Fahrer empfangen worden sind. Sollte von dem Subjekt OBU_Fahren die Nachricht Beginn Mautstrecke vom Subjekt OBU_Position empfangen worden sein, dann würde der Funktionsablauf auf die Funktion Ende übergehen, mit welcher das Ende der Mautstrecke abgewartet wird, bevor die Fahrdaten mit der Funktion Fahrdaten an das Toll_Collection_Center gesendet werden.

Mit diesem Validierungsverfahren kann somit das Entstehen, gegebenenfalls der Inhalt und die Weiterleitung der einzelnen Nachrichten verfolgt werden.

Die Validierung der automatisch erzeugten Quellcodedateien kann sofort nach der automatischen Erzeugung des Quellcodes ausgeführt werden, ohne dass zusätzlich ein Programmcode manuell eingefügt werden muss. Dies ist ein wesentlicher Vorteil des erfindungsgemäßen Verfahrens, der zum einen darauf beruht, dass die Kommunikation zwischen den einzelnen Subjekten vollständig automatisch erzeugt wird und zum anderen, dass die Tätigkeit der einzelnen Subjekte (Funktion TUN) durch eine Anfrage an den Benutzer ersetzt wird, wenn nicht bereits Programmelemente aus Bibliotheken vorhanden sind, die automatisch eingebunden werden.

Die Erfindung erlaubt somit das Erzeugen einer automatisch ausführbaren und validierbaren Programmstruktur für sehr komplexe Prozesse mit einigen Hunderten oder Tausenden Subjekten, die dann je nach Bedarf durch manuell erstellte Programme oder durch bereits vorhandene Programme ergänzt werden kann.

Figur 15 zeigt ein System zum Ausführen des erfindungsgemäßen Verfahrens. Das System umfasst ein Computersystem 12, das im Sinne der vorliegenden Erfindung ein einzelner Computer als auch ein Netzwerk umfassend eine Vielzahl von Computern sein kann. Das Computersystem 12 weist zumindest eine Eingabeeinrichtung 13 umfassend eine Tastatur und eine Computermaus, sowie eine Ausgabeeinrichtung 14 auf. Die Ausgabeeinrichtung ist typischerweise ein Monitor oder ein Beamer. In dem Computersystem 12 ist eine Java®-Plattform 15 vorgesehen.

Das oben beschriebene erfindungsgemäße Verfahren ist durch Software beziehungsweise Computerprogramme realisiert. Diese Software weist als zentrales Programm einen Quellcodegenerator 16 auf. Der Quellcodegenerator 16 ist mit einem Programm 17 zum Erstellen eines Prozessdiagrammes verbunden, umfassend den oben beschriebenen Prozessmanager und den oben beschriebenen Subjektmanager. Zwischen dem Programm 17 und der Eingabeeinrichtung 13 und der Ausgabeeinrichtung 14 besteht eine Datenverbindung 18, über welche von einem Benutzer die entsprechenden Daten zum Erstellen des Prozessdiagrammes eingegeben werden können und von dem Programm die Daten an die Ausgabeeinrichtung 14 zum Darstellen des Diagrammes ausgegeben werden können. Vorzugsweise wird das Diagramm in der Form eines Blockschaltbildes erstellt, wobei jedem Subjekt ein separater Block zugeordnet ist. Im Rahmen der Erfindung ist es jedoch nicht notwendig, dass die Prozessdatei graphisch erzeugt wird. Grundsätzlich wäre es auch möglich, den Text der Prozessdatei mit einem Editor zu schreiben. Die graphische Erzeugung der Prozessdatei ist jedoch wesentlich einfacher und intuitiver ausführbar.

Ist die Prozessdatei einmal erzeugt, wird sie an den Quellcodegenerator 16 weiter gegeben, der für jedes Subjekt einen Quellcode 19 erzeugt. Die Quellcode eines jeden Subjektes stellen jeweils ein separates Programm dar, die über Datenverbindungen 20 miteinander verknüpft sind.

Mit einem Validierungsprogramm 21 können die Quellcode individuell oder alle gemeinsam gleichzeitig gestartet werden.

Ist das erfindungsgemäße System ein Netzwerk mit mehreren Computern, ist es nicht notwendig, dass auf jedem Computer eine Java®-Plattform 15 vorhanden ist. Wird der Quellcode 19 eines Subjektes compiliert, so kann er an einem weiteren Computer im Netzwerk, auf dem er nicht erzeugt worden ist, direkt ausgeführt werden.

Die Erfindung ist oben an Hand eines Ausführungsbeispieles näher erläutert worden, bei welchem ein Quellcode in der Programmiersprache Java® erzeugt wird. Die Erfindung ist selbstverständlich nicht auf diese Programmiersprache beschränkt. Sie ist auch in jeder beliebigen anderen Programmiersprache ausführbar. Die Verwendung von Java® hat jedoch den Vorteil gegenüber anderen Programmiersprachen, dass sie systemunabhängig auf unterschiedlichen Rechnern ausführbar ist, so dass bei einer Anwendung in einem Netzwerk auf einfache Art und Weise sicher gestellt ist, dass die automatisch erzeugten Quellcodedateien überall im Netzwerk ausführbar sind.

Mit der vorliegenden Erfindung wird ein Werkzeug (Methode: Quellcode erzeugen) geschaffen, mit welchem Quellcode automatisch generiert wird. Eine manuelle Bearbeitung des automatisch erzeugten Quellcodes ist nicht notwendig. Der Quellcode ist somit sofort ausführbar.

## Patentansprüche

1. Verfahren zum Erzeugen eines Quellcodes für ein Computerprogramm zur Ausführung bzw. Simulation eines Prozesses, bei dem mehrere Subjekte miteinander kommunizieren, umfassend folgende Schritte:
- Beschreiben des Prozesses, wobei ein jedes Subjekt, die Kommunikation zwischen den Subjekten und die Art der Tätigkeit der einzelnen Subjekte definiert werden,
- Speichern des beschriebenen Prozesses mit den eingegebenen Definitionen in einer Prozessdatei,
- automatisches Erzeugen eines Quellcodes für ein Computerprogramm, wobei für ein jedes Subjekt eine separate Quellcodedatei erzeugt wird, die jeweils Befehle zum Austausch von Daten mit Quellcodedateien weiterer Subjekte gemäß den in der Prozessdatei enthaltenen Informationen umfassen.

2. Verfahren nach Anspruch 1,
**dadurch gekennzeichnet,**
**dass** die Quellcodedatei mit einem Befehlerzeugt wird, der beim Ausführen des Quellcodes Daten der Prozessdatei liest, und in Abhängigkeit dieser Daten bestimmte Funktionen ausführt.

3. Verfahren nach Anspruch 1 oder 2,
**dadurch gekennzeichnet,**
**dass** die automatisch erzeugte Quellcodedatei zum Aufrufen von drei unterschiedliche Typen von Funktionen erzeugt wird, nämlich SENDEN, EMPFANGEN und TUN.

4. Verfahren nach einem der Ansprüche 1 bis 3,
**dadurch gekennzeichnet,**
**dass** der Quellcode mit einer Abfrage versehen wird, die in der Prozessdatei in einer Funktionsfolge beschriebene Funktionen abfragt und aufruft.

5. Verfahren nach einem der Ansprüche 1 bis 4,
**dadurch gekennzeichnet,**
**dass** der Prozess mittels eines graphischen Diagrammes beschrieben wird.

6. Verfahren nach Anspruch 5
**dadurch gekennzeichnet,**
**dass** das graphische Diagramm in der Prozessdatei mit einer Metasprache beschrieben wird.

7. Verfahren nach Anspruch 5 oder 6,
**dadurch gekennzeichnet,**
**dass** als graphische Diagramme Blockschaltbilder erzeugt werden, wobei ein jedes Subjekt durch einen Block und die Kommunikation zwischen den Subjekten durch Pfeile zwischen den Blöcken dargestellt werden.

8. Verfahren nach einem der Ansprüche 1 bis 7,
**dadurch gekennzeichnet,**
**dass** als Befehle zum Austausch von Daten Kommunikationsbefehle (RMI: remote method invocation) verwendet werden, die auf dem Monitorkonzept beruhen, so dass ein aktives Warten (busy waiting) vermieden wird.

9. Verfahren nach Anspruch 8,
**dadurch gekennzeichnet,**
**dass** als Befehle zum Übertragen von Daten zwischen den Subjekten notify, notifyall und wait der Programmiersprache JAVA® verwendet werden.

10. Verfahren nach einem der Ansprüche 1 bis 9
**dadurch gekennzeichnet,**
**dass** die Quellcodedateien derart erzeugt werden, dass sie in einem Computernetzwerk auf unterschiedlichen Computern ausführbar sind und über das Computernetzwerk hinweg kommunizieren.

11. Verfahren zum Validieren der Kommunikation eines automatisch, insbesondere nach einem der Ansprüche 1 bis 10 erzeugten Quellcodes, wobei
für Aktionen, für die nicht automatisch ein Quellcode erzeugbar ist, eine Abfrage an den Benutzer bei der automatischen Erzeugung des Quellcodes eingesetzt wird, und beim Validieren des automatisch erzeugten Quellcodes der Quellcode zur Ausführung gebracht wird, wobei der Benutzer interaktiv die einzelnen Abfragen zu bestätigen hat, wobei ggfs. vom Benutzer bestimmte Eingaben (Parameter, Entscheidung) zu tätigen sind.

12. Verfahren nach Anspruch 11
**dadurch gekennzeichnet,**
**dass** Aktionen, die innerhalb eines Subjektes auszuführen sind, durch eine Abfrage an den Benutzer ersetzt werden.

13. System zum Ausführen eines der Verfahren nach einem der Ansprüche 1 bis 12
**dadurch gekennzeichnet,**
**dass** das System ein Computersystem (12) mit zumindest einer Eingabeeinrichtung (13) und einer Ausgabeeinrichtung (14) umfasst, auf dem eine Software zum Ausführen des Verfahrens nach einem der Ansprüche 1 bis 12 gespeichert ist.

14. System nach Anspruch 13
**dadurch gekennzeichnet,**
**dass** das Computersystem ein Netzwerk mit mehreren Computern ist.

15. Datenträger, auf dem ein Computerprogramm gespeichert ist, das beim Laden in einen Computer ein Verfahren nach einem der Ansprüche 1 bis 12 ausführt.
